# EUROPÄISCHE PATENTSCHRIFT

(11) **EP 0 882 302 B1**
(45) Veröffentlichungstag und Bekanntmachung des Hinweises auf die Patenterteilung: **01.09.1999**
(21) Anmeldenummer: 97906100.9
(22) Anmeldetag: 20.02.1997
(51) Int. Cl.: H01H 39/00, H01R 11/28, H01R 13/637

(54) **STROMUNTERBRECHER FÜR EINE BATTERIELEITUNG VON FAHRZEUGEN**
CURRENT BREAKER FOR A VEHICLE BATTERY LEAD
INTERRUPTEUR POUR FIL DE BATTERIE DE VEHICULE

(30) Priorität: 21.02.1996 DE 19606447
(43) Veröffentlichungstag der Anmeldung: 09.12.1998
(73) Patentinhaber: Bayerische Motoren Werke Aktiengesellschaft, 80788 München (DE); AUTO-KABEL HAUSEN GmbH & CO. BETRIEBS-KG, D-79688 Hausen (DE)
(72) Erfinder: ALBIEZ, Robert, D-85084 Reichertshofen (DE); GRÖBMAIR, Maximilian, D-83623 Dietramszell (DE); FAHRNBAUER, Bernhard, D-80339 München (DE); KRAPPEL, Alfred, D-85737 Ismaning (DE)
(86) Internationale Anmeldenummer: EP9700812
(87) Internationale Veröffentlichungsnummer: WO9731385

(56) Entgegenhaltungen:
- EP-A- 0 665 566
- DE-U- 9 401 486
- FR-A- 1 269 325
- FR-A- 2 616 958
- US-A- 2 983 801
- US-A- 3 120 591

## Beschreibung

Die Erfindung bezieht sich auf einen Stromunterbrecher mit den Merkmalen des Oberbegriffs vom Patentanspruch 1.

Ein derartiger Stromunterbrecher ist aus der DE 44 02 994 A1 bekannt. Das Kontaktelement ist beispielsweise als umlaufender Federkorb ausgebildet und übernimmt zusätzlich die Funktion, die beiden Verbindungsteile in Wirkstellung zu halten. Das bedeutet eine mechanisch schwergängige Verbindung der beiden Verbindungsteile, die im Rahmen der Fertigung die Gefahr bestehen läßt, die beiden Verbindungsteile nicht hundertprozentig in ihre Wirkstellung einzustellen. Die Folge davon ist eine möglicherweise nicht in jedem Fall gewährleistete Funktion des Stromunterbrechers. Die Funktion hängt von der Wirksamkeit des Hilfsantriebs ab. Bei der eingangs genannten DE 44 02 994 A1 ist der Hilfsantrieb durch einen Treibsalz gegeben, der im Bedarfsfall gezündet wird und eine definierte Gasmenge erzeugt. Da es sich um einen Explosivkörper handelt, ist die Menge des Explosivstoffs exakt und möglichst klein bemessen. Die Menge ist auf den Fall eingestellt, bei dem sich die beiden Verbindungsteile exakt in der Wirkstellung befinden. Ist dies nicht der Fall, so reicht möglicherweise die erzeugte Gasmenge nicht aus, die weiteren Verbindungsteile sicher voneinander zu lösen. Andererseits ist eine Überdimensionierung der Sprengstoffmenge nicht zulässig, da dies dann, wenn sich die beiden Verbindungsteile in ihrer vorschriftsmäßigen Wirkstellung befinden, zu einer übermäßigen und eine mögliche Gefahr herauf beschwörenden Beschleunigung der beiden Kontaktteile führt.

Auch die Möglichkeit, das Kontaktteil wegzulassen und mit Hilfe einer (Preß) Passung sowohl die Funktion des elektrischen Übergangs als auch die Rückhaltekraft am Ort des elektrischen Rückübergangs sicherzustellen. führt nicht zum Ziel. Eine Passung ist von Fertigungstoleranzen der Kontaktflächen einerseits und dem Verlauf der Einpreßkraft während dem Zusammenfügen der beiden Verbindungsteile andererseits abhängig. Diese Einflußgrößen sind in der Prozeßführung problematisch und führen zu erheblichen Fertigungsaufwendungen, da beispielsweise die Einpreßkraft während des Einpreßvorgangs geführt werden muß und gleichzeitig durch einen erhöhten Fertigungsaufwand das Toleranzmaß der beiden Verbindungsteile an ihrem Übergang gering gehalten werden muß.

Der Erfindung liegt die Aufgabe zugrunde, einen Stromunterbrecher der eingangs genannten Art zu schaffen, der fertigungstechnisch auf einfache Weise die Sicherheit einer zuverlässigen Funktion bietet.

Die Erfindung löst diese Aufgabe durch die Merkmale des Patentanspruchs 1.

Die räumliche Trennung des elektrischen Übergangs und des Ortes, an dem die Haltekraft aufgebracht wird, bietet auch die Möglichkeit, diese Haltekraft unabhängig von der elektrischen Verbindung einzustellen. Es ist in der Fertigung dann beispielsweise möglich, die Haltekraft zunächst nicht aufzubringen und die beiden Verbindungsteile lediglich lose zusammenzustecken. Der elektrische Übergang ist dann gewährleistet. Erst nach Abschluß der Fertigung, bei dem es jederzeit möglich ist, die beiden Verbindungsteile voneinander zu trennen, wird die Haltekraft durch entsprechende Maßnahmen aufgebracht. Dies kann beispielsweise dadurch erfolgen, daß die beiden Verbindungsteile miteinander verschweißt werden.

Die Möglichkeit, die beiden Verbindungsteile beispielsweise im Rahmen der Fertigung einfach voneinander zu lösen und wieder zusammenzufügen, wird am einfachsten erreicht, in dem das Kontaktelement, wie an sich bekannt, ein Umlaufender Federkorb ist. Allerdings ist es die Dimensionierung hinsichtlich der Querkraft so zu wählen, daß diese Querkraft lediglich eine gute elektrische Kontaktgabe bewirkt, jedoch einen Reibschluß zwischen den beiden Verbindungsteilen nicht herstellt.

Gegenüber der Möglichkeit, die Haltekraft durch Verschweißen der beiden Verbindungsteile aufzubringen, ergibt sich eine vorteilhafte Ausbildung des Stromunterbrechers dann, wenn die Haltekraft durch ein Gehäuse aufgebracht wird, das nach Herstellen der elektrischen Verbindung der beiden Verbindungselemente um diese herum geschlossen wird. Ein derartiges Gehäuse, zweckmäßigerweise aus Kunststoff, ist einfach in der Herstellung und hinsichtlich der konstruktiven Gegebenheiten sicher und zuverlässig zu beherrschen. Es kann auf verschiedene Weise ausgestaltet sein. Zum einen kann es in der Weise an die äußere Form der Verbindungsteile angepaßt sein, daß es nur dann geschlossen werden kann, wenn die beiden Verbindungsteile in ihrer Wirkstellung sitzen. Zusätzlich oder alternativ kann das Gehäuse auch mit Brechelementen versehen sein, die gewünschte Haltekraft hervorrufen. Diese Brechelemente können beispielsweise im Bewegungsweg des einen Verbindungsteils angeordnet sein. Wird der Hilfsantrieb ausgelöst, so verhindern die Brechelemente zunächst die Bewegung der beiden Verbindungsteile relativ zueinander und erst dann, wenn der Hilfsantrieb vollständig wirksam ist, übersteigt die durch ihn hervorgerufene Antriebskraft die Haltekraft. Die Brechelemente geben dann schlagartig die Bewegung eines der beiden Verbindungsteile frei. Der dann vorhandene Impuls wird das bewegliche Kontakteil sicher aus dem stationären Kontakteil beschleunigen und die Verbindung trennen. Durch die über Form und Material des Brechelements eingestellte Haltekraft der Brechelemente läßt sich auch die Dynamik des Trennvorgangs der Verbindungsteile steuern.

Alternativ oder ergänzend kann das Gehäuse auch zweigeteilt sein und eine definierte Losbrechkraft besitzen. Die Wirkung der beiden Gehäusehälfte entspricht der der Brechelemente.

Schließlich kann das Gehäuse so ausgebildet sein, daß es als Käfig für die beiden Verbindungsteile auch dann wirkt, wenn diese durch den Hilfsantrieb voneinander gelöst sind. Dadurch wird die Bewegung der Verbindungsteile voneinander begrenzt und ein Schutz nach außen hin erzielt. Durch geeignete konstruktive Maßnahmen ist es auch möglich, eine Rückbewegung der Verbindungsteile auch aufeinander zu verhindern und damit eine erneute Kontaktgabe der beiden Verbindungsteile auszuschließen.

Anhand der Zeichnung ist die Erfindung weiter erläutert. Es zeigt
- Fig. 1: einen Teil eines ersten Ausführungsbeispiels des erfindungsgemäßen Stromunterbrechers im offenen Zustand,
- Fig. 2: den Stromunterbrecher von Fig. 1 im geschlossenen Zustand,
- Fig. 3: eine perspektivische Darstellung des kompletten Stromunterbrechers der Figuren 1 und 2,
- Fig. 4: einen Schnitt des Stromunterbrechers von Fig. 3,
- Fig. 5: eine zweite Ausführungsform der Erfindung in perspektivischer Darstellung und
- Fig. 6: den Stromunterbrecher von Fig. 5 im Schnitt.

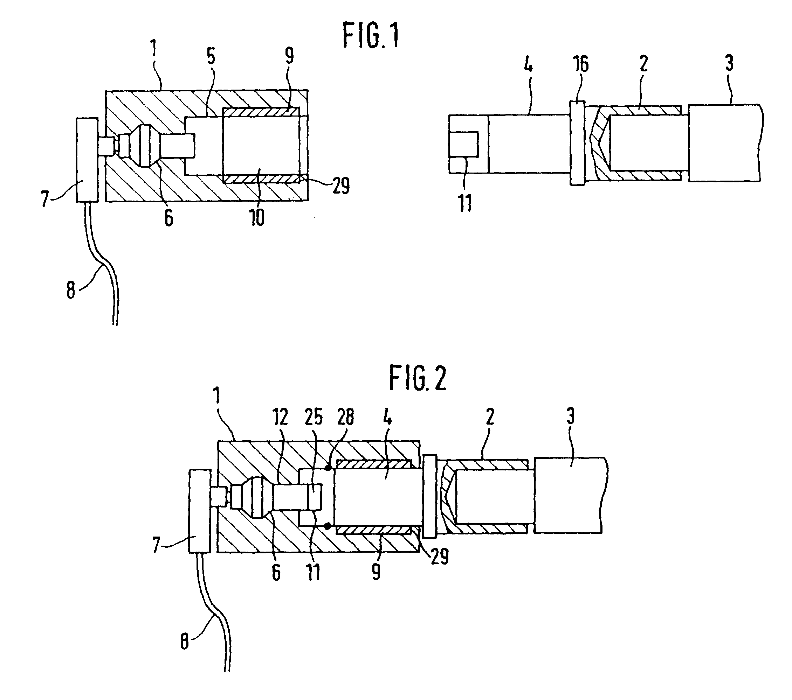

Der in Fig. 1 teilweise dargestellte Stromunterbrecher besteht im wesentlichen aus zwei Verbindungsteilen 1 und 2, von denen das Teil 1 mit einer nicht dargestellten Batterieklemme 27 und das Teil 2 mit einer Batterieleitung 3 verbunden ist. Das Teil 2 ist mit einem zylinderförmigen Fortsatz 4 in einen Hohlzylinder 5 des Teils 1 einsteckbar. Am Ende des Hohlzylinders 5 sitzt eine Sprengkapsel 6, die über einen Stecker 7 mit einem Steuergerät (nicht dargestellt) verbunden ist. Hiervon sind die zum Steuergerät führenden Leitungen 8 angedeutet.

In der Wand des Hohlzylinders 5 sitzt ein Federkorb 9, der über Federiamellen 10 die elektrische Verbindung zwischen den Teilen 1 und 2 herstellt. Der Federkorb kann über einen Hinterschnitt 29 (Fig. 1, 2) im Teil 1 gehalten werden, oder alternativ über eine oder mehrere Schweiß- /oder Klebestellen (nicht dargestellt). Dies ist anhand von Fig. 2 zu erkennen. Das Teil 2 kann an seiner Stimseite ferner einen Hohlzylinder 11 aufweisen, der im gesteckten Zustand die Sprengkapsel 6 im vorderen Bereich 12 umschließt und auf diese Weise ein definiertes Vorvolumen 25 einstellt.

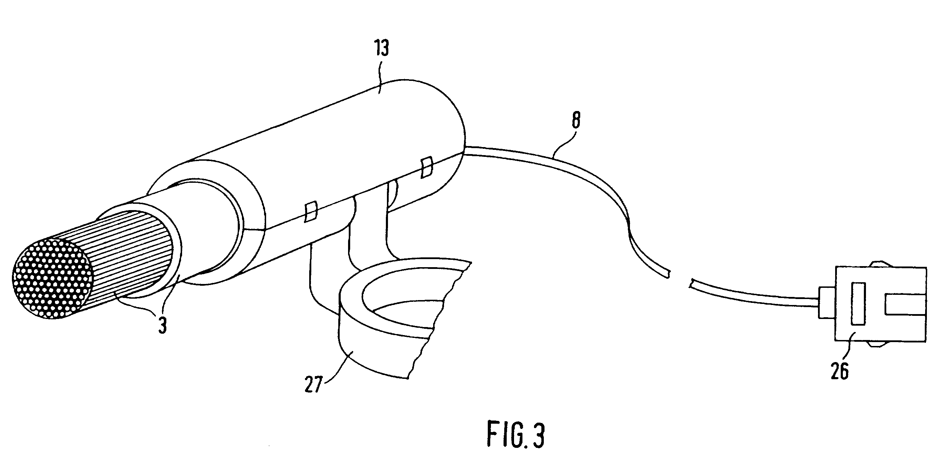

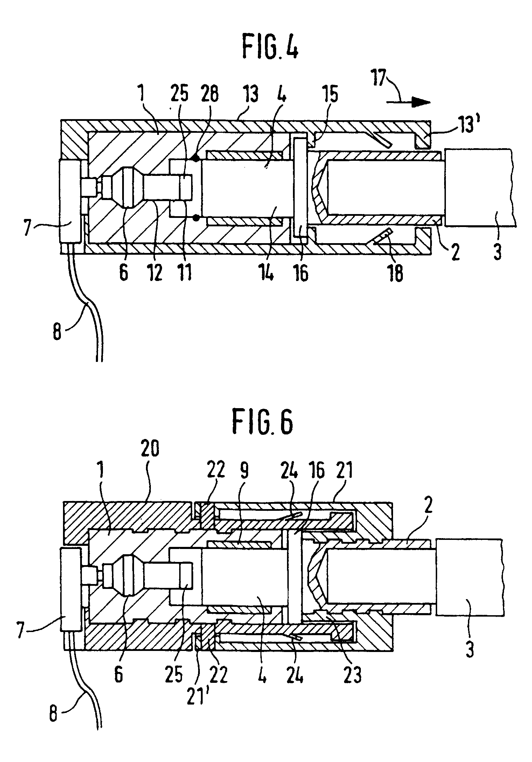

Die in den Figuren 1 und 2 dargestellte Anordnung der beiden Verbindungsteile 1 und 2 ist in ein Gehäuse 13 eingeklipst, und besitzt die in Fig. 3 dargestellte äußere Gestalt. Der in Fig. 3 dargestellte Stromunterbrecher ist in Fig. 4 im Schnitt gezeigt. Das Gehäuse 13 ist z.B. längs der Mittellinie 14 geteilt und so beschaffen, daß es nur dann geschlossen werden kann, wenn der Stromunterbrecher den zusammengebauten Zustand besitzt, wie er in Fig. 2 dargestellt ist. Dabei hintergreift das Gehäuse mit einer Ringschulter 15 einen Bund 16 des Teils 2. Die Ringschulter 15 wirkt als Brechelement und ist in ihrer Wandstärke auf die Sprengkraft der Sprengkapsel 6 abgestimmt.

Bei einem schweren Unfall wird die Sprengkapsel 6 durch das Steuergerät, bei dem es sich beispielsweise unter das Airbag-Steuergerät handelt, gezündet. Durch die Sprengkapsel 6 wird eine definierte Gasmenge schlagartig aus dem vorderen Teil 1 der Sprengkapsel 6 freigesetzt; die Gasmenge füllt das anschließende Vorvolumen 25. Bedingt durch die schlagartige Freisetzung einer erheblichen Gasmenge kommt es zu einem erheblichen Druckaufbau innerhalb des Vorvolumens 25 zwischen den Teilen 11 und 12 mit der Folge, daß das Teil 2 aus dem Teil 1 ausgetrieben wird. Die Ringschulter 15 hat bis zu diesem Zeitpunkt, d.h. bis eine ausreichende Gasmenge freigesetzt und damit ein ausreichender Druck erzeugt ist, eine Bewegung des Teils 2 verhindert. Schlagartig jedoch bricht die Ringschulter 15 weg und gibt die Bewegung des Teils 2 frei.

Der Rückhalt des Teils 2 durch das Kunststoffgehäuse ist notwendig um ein Vergrößern des Vorvolumens bereits bei niedrigen Gasdruck zu vermeiden. Die Bewegung bei zu niedrigen Gasdruck würde das Vorvolumen vergrößern und die durch die Zündkapsel begrenzte Gasmenge könnte den Gasdruck und somit die Ausdrückkraft nicht mehr ausreichen, wodurch eine sichere Trennung nicht mehr gewährleistet wäre. Wird dagegen das Vorvolumen bis zu einem durch das Kunststoffgehäuse eingestellten Gasdruck/Auspreßkraft konstant gehalten, wird der beim Brechen der Kunststoffverriegelung entstehende Impuls ausreichen, das Teil 2 sicher aus dem Teil 1 beschleunigen und Teil 1 und Teil 2 elektrisch voneinander trennen.

Das Teil 2 bewegt sich in Richtung des Pfeils 17 relativ zum Teil 1 innerhalb des Gehäuses 13 und schlägt mit dem Bund 16 an der Rückwand 13' des Gehäuses 13 an. Das Gehäuse ist an dieser Stelle so bemessen, daß die kinetische Energie des Teils 2 nicht ausreicht, die Rückwand 13' zu zerstören. Gleichzeitig nehmen Rückhalteelemente 18, die innerhalb des rückwärtigen Teils des Gehäuses angeordnet sind, wieder die eingezeichnete Lage ein und verhindern eine Bewegung des Teils 2 in Richtung des Teils 1. Das Teil 2 ist damit zwischen der Rückwand 13' und den Rückhalteelementen 18 mit seiner Schulter 16 gehalten.

Voraussetzung für die Wirksamkeit der in den Figuren 1 bis 4 dargestellten Anordnung ist die Abstimmung der Wandstärke der Ringschulter 15, der Sprengwirkung der Sprengkapsel 6, und des durch die Teile 11 und 12 gebildeten Volumens, sowie der Tatsache, daß der Federkorb 9 im Verhältnis zur Rückhaltekraft der Ringschulter 15 in seiner Haltekraft zu vernachlässigen ist. Letzteres bietet gleichzeitig die Möglichkeit, vor dem Verbau des Gehäuses 13 die beiden Verbindungsteile 1 und 2 jederzeit problemlos voneinander lösen zu können. Dies ist im Rahmen der Fertigung beispielsweise zur Überprüfung der elektrischen Eigenschaften sowie zur Erleichterung des Montagevorgangs von Vorteil.

Gleichzeitig ist die dargestellte Anordnung besonders reparaturfreundlich. Nach dem Auslösen der Sprengkapsel 6 kann die Anordnung erneut geschärft werden, in dem lediglich das Gehäuse 13 und das Teil 1 (mit Batterieklemme) erneuert werden. Hierzu wird lediglich der Stecker 7 von dem bisherigen Teil 1 abgezogen und auf das Ersatzteil gesteckt. Das Teil 1 wird dann mit dem Teil 2 zusammengesteckt. Anschließend wird ein neues Gehäuse angebracht. Die gesamte Anordnung befindet sich dann wieder in einwandfreiem funktionsfähigen Zustand.

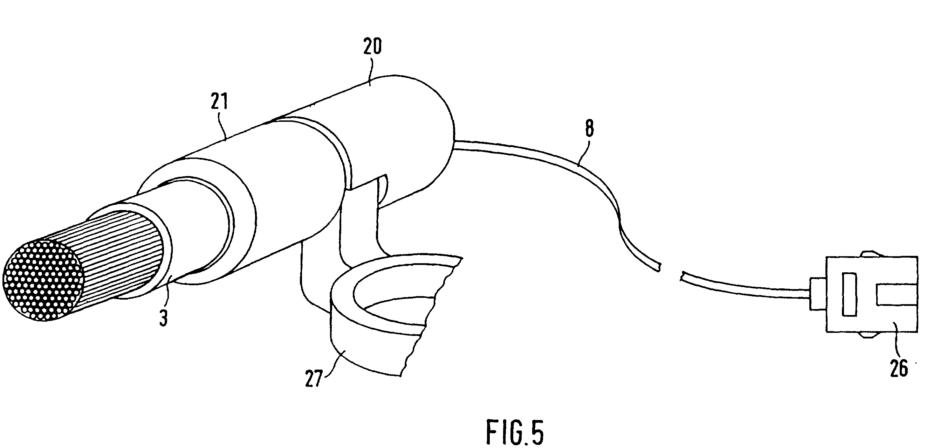

Beim Ausführungsbeispiel nach Fig. 5 und 6 ist das Gehäuse 19 entsprechend dem Gehäuse 13 der Figuren 1 bis 4 zweigeteilt. Die beiden Gehäusehälften 20 und 21 sind durch mehrere Stifte 22 miteinander verbunden. Die Gehäusehälfte 21 hintergreift mit einem zylindrischen Ansatz 23 den Bund 16.

Im Auslösefall werden die Stifte 22 bei einem definierten Gasdruck zerstört. Die Gehäusehälfte 21 fährt nach Art einer Lafette über die Außenwand der Gehäusehälfte 20 und kommt am Ende der Gehäusehälfte 20 zum stehen. Der Vorderteil 21' der Gehäusehälfte 21 sitzt dabei am Ende der Hälfte 20 und ist durch Rückhalteelemente 24 fixiert.

In Fig. 5 ist auch die Möglichkeit dargestellt, die Ansteuerleitung über eine Steckverbindung 26 an die Auslöseelektronik anzuschließen.

Unter Umständen ist es notwendig, eine erhöhte Gasdichtheit für das Vorvolumen zu realisieren. Prinzipiell möglich ist dies durch Verwendung eines O-Ringes 28 (Fig. 2; 4) oder einen Lamellendichtung 28die bei hergestellter Verbindung zwischen Hohlzylinder 5 und Zylinder 4 des beweglichen Teils wirkt.

Dabei ist es auch denkbar, ein eigenes Kunststoffteil (nicht dargestellt) mit Dichtfunktion 28 zu verwenden, daß über den Sprengkapsel 6 im Hohlzylinder 5 vor dem Zylinder 4 des beweglichen Teils 2 angeordnet ist. Die Dichtfunktion kann über die Paßgenauigkeit des Kunststoffteils oder über dem Kunststoffteil zugeordnete Dichtelemente erfolgen.

Zusätzlich kann das Kunststoffteil als Isolierteil bei ausgelöster Verbindung wirken.

## Patentansprüche

1. Stromunterbrecher für eine Batterieleitung von Fahrzeugen, mit einem Kontaktelement (9) zwischen den beiden Verbindungsteilen (1,2) für deren elektrische Verbindung und mit einem Hilfsantrieb zur Entfernung der beiden Verbindungsteile (1,2), dadurch gekennzeichnet, daß das Kontaktelement (9) im wesentlichen nur eine senkrecht zu den Verbindungsteilen (1, 2) gerichtete Querkraft aufbringt und daß die gegen die Wirkung des Hilfsantriebs gerichtete Haltekraft im wesentlichen an einer Stelle (15, 16) aufgebracht wird, die räumlich vom Kontaktelement (5) entfernt ist.

2. Stromunterbrecher nach Anspruch 1, dadurch gekennzeichnet, daß das Kontaktelement als Kontaktlamellen (10) eines umlaufenden Federkorbs (9) ausgebildet ist.

3. Stromunterbrecher nach Anspruch 1 oder 2, dadurch gekennzeichnet, daß die Haltekraft durch ein Gehäuse (13) aufgebracht wird, in dem die beiden Verbindungsteile relativ zueinander durch den Hilfsantrieb (6) bewegbar sind.

4. Stromunterbrecher nach Anspruch 3, dadurch gekennzeichnet, daß das Gehäuse (13) nur bei funktionssicheren Zustand des Stromunterbrechers schließbar ist.

5. Stromunterbrecher nach Anspruch 3 oder 4, dadurch gekennzeichnet, daß das Gehäuse Brechelemente (15) besitzt, die die Verbindungsteile in Wirkstellung halten.

6. Stromunterbrecher nach Anspruch 4 oder 5, dadurch gekennzeichnet, daß das Gehäuse zwei Hälften (20, 21) besitzt, die mit definierter Losbrechkraft voneinander lösbar sind.

## Claims

1. A circuit-breaker for a battery line in motor vehicles, comprising a contact element (9) for electrically connecting the two parts (1, 2) to be connected and also comprising an auxiliary drive for detaching the two parts (1, 2), characterised in that the contact element (9) substantially applies only a transverse force at right angles to the parts (1, 2) to be connected, and the holding force, directed against the action of the auxiliary drive, is applied substantially at a place (15, 16) which is spatially separated from the contact element (5).

2. A circuit-breaker according to claim 1, characterised in that the contact element is in the form of contact laminations (10) in a rotating spring cage (9).

3. A circuit-breaker according to claim 1 or 2, characterised in that the retaining force is applied by a casing (13) in which the two parts to be connected are movable relative to one another by the auxiliary drive (6).

4. A circuit-breaker according to claim 3, characterised in that the casing (13) is closable only when the circuit-breaker is in a fully operative state.

5. A circuit-breaker according to claim 3 or 4, characterised in that the casing contains breakable elements (15) whereby the parts to be connected are held in the operative position.

6. A circuit-breaker according to claim 4 or 5, characterised in that the casing has two halves (20, 21) which are separable from one another by a defined breaking-away force.

## Revendications

1. Coupe-circuit pour un câble de batterie de véhicule automobile comprenant un élément de contact (9) entre les deux pièces de liaison (1, 2) pour assurer leur liaison électrique et un entraînement auxiliaire pour écarter les deux pièces de liaison (1, 2),
caractérisé en ce que
• l'élément de contact (9) applique essentiellement seulement une force transversale perpendiculaire aux pièces de liaison (1, 2) et,
• la force de retenue dirigée contre l'action de l'entraînement auxiliaire est appliquée essentiellement à un endroit (15, 16) éloigné de l'élément de contact (5).

2. Coupe-circuit selon la revendication 1,
caractérisé en ce que
l'élément de contact est réalisé sous la forme de lamelles de contact (10) d'un panier à ressort (9) périphérique.

3. Coupe-circuit selon l'une des revendications 1 ou 2,
caractérisé en ce que
la force de retenue est appliquée par un boîtier (13) en ce que les deux pièces de liaison sont mobiles l'une par rapport à l'autre sous l'effet du moyen d'entraînement auxiliaire (6).

4. Coupe-circuit selon la revendication 3,
caractérisé en ce que
le boîtier (13) ne peut être fermé que lorsque le coupe-circuit est dans un état de fonctionnement garanti.

5. Coupe-circuit selon la revendication 3 ou 4,
caractérisé en ce que
le boîtier comporte des éléments de rupture (15) qui retiennent en position active les pièces de liaison.

6. Coupe-circuit selon la revendication 4 ou 5,
caractérisé en ce que
le boîtier possède deux moitiés (20, 21) qui peuvent être séparées avec une force de rupture déterminée.
